# EUROPÄISCHE PATENTSCHRIFT

(11) **EP 4 321 428 B1**
(45) Veröffentlichungstag und Bekanntmachung des Hinweises auf die Patenterteilung: **29.04.2026**
(21) Anmeldenummer: 22190150.7
(22) Anmeldetag: 12.08.2022
(51) Int. Cl.: B64C 1/20, B60P 7/08

(54) **SCHIENENSYSTEM FÜR EINE KABINE EINES FAHRZEUGS**
RAIL SYSTEM FOR A CABIN OF A VEHICLE
SYSTÈME DE RAILS POUR UNE CABINE D'UN VÉHICULE

(43) Veröffentlichungstag der Anmeldung: 14.02.2024
(73) Patentinhaber: Airbus Operations GmbH, 21129 Hamburg (DE)
(72) Erfinder: Poppe, Andreas, 21129 Hamburg (DE); Benthien, Hermann, 21129 Hamburg (DE)
(74) Vertreter: LKGLOBAL Partnerschaftsgesellschaft mbB

(56) Entgegenhaltungen:
- DE-A1- 10 054 586
- DE-A1- 102006 022 032
- DE-A1- 102019 111 000
- DE-B4- 102018 122 813
- US-A1- 2005 156 095
- US-A1- 2020 398 990
- US-A1- 2022 219 762

## Beschreibung

### Technisches Gebiet

Die Erfindung betrifft ein Schienensystem zur Installation von Gegenständen in einer Kabine eines Fahrzeugs, eine Fahrzeugkabine sowie ein Fahrzeug mit mindestens einer Fahrzeugkabine und/oder einem Schienensystem.

### Technischer Hintergrund

Zur Befestigung von Gegenständen in einer Kabine eines Fahrzeugs, insbesondere eines Luftfahrzeugs, werden oftmals Schienen und Schienensysteme verwendet. Beispielsweise ist es üblich, Passagiersitze, Kabinenmonumente und dergleichen auf Sitzschienen zu befestigen, die parallel zu einer Längsachse des Flugzeugs an oder in einem Kabinenfußboden angeordnet und mit geeigneten Aufnahmen versehen sind. Die Sitzschienen sind dabei an Querträgern einer Fahrzeugstruktur angeordnet und tragen oftmals auch Fußbodenpaneele. Diese sind hierzu etwa über randseitige Schraubverbindungen mit den Sitzschienen verbunden. Durch eine Ausführung der Sitzschienen mit einem Aufnahmebereich für Einbauten als ein erster Gurt, einem hierzu beabstandet angeordneten zweiten Gurt und einem dazwischen verlaufenden Steg kann eine Kraftrichtung zwischen einem mit der Sitzschiene verschraubten Fußbodenpaneel und der Struktur durchaus komplex und nicht geradlinig sein. Zusätzlich zu der Verschraubung ist an mehreren Stellen eine Abdichtung zum Verhindern des Durchtretens von Feuchtigkeit erforderlich.

US 2020/398990 A1 beschreibt, laut der bei espacenet verfügbaren Übersetzung, eine hybride Tragschiene zur Aufnahme von Einbauten in einer Fahrzeugkabine umfasst eine Tragschienenbasis, erste Befestigungselemente, zweite Befestigungselemente, die komplementär zu den ersten Befestigungselementen ausgebildet sind, und ein Tragschienenoberteil. Der Tragschienensockel weist eine Unterseite und eine Oberseite auf. Die Oberseite weist eine sich entlang einer Haupterstreckungsrichtung des Tragschienensockels erstreckende Aufnahme zum Einschieben von ersten Befestigungselementen und auf einer der Unterseite abgewandten Seite eine Auflagefläche mit mindestens einer Aussparung auf. Das Aufnahmegehäuse ist dabei so geformt, dass ein Herausrutschen der ersten Befestigungselemente in Richtung der Auflagefläche verhindert wird. Das Tragschienenoberteil verfügt über eine Auflagefläche zum Aufsetzen auf den Untergrund. Die Anlagefläche weist Aussparungen auf, durch welche die zweiten Befestigungselemente zum Einstecken in die ersten Befestigungselemente geführt werden.

US 2005/156095 A1 beschreibt, laut der bei espacenet verfügbaren Übersetzung, eine Sitzmontageschiene, die sich zur Befestigung von Passagiersitzen an einem Boden, beispielsweise einem Flugzeugkabinenboden, eignet, und die unterteilt ist in einen oberen Abschnitt zur Befestigung eines Sitzes und einen unteren Abschnitt zur Befestigung der Schiene am Boden. Der obere Abschnitt besteht vorzugsweise aus einer Titanlegierung. Der untere Abschnitt besteht vorzugsweise aus einer Aluminiumlegierung. Die beiden Abschnitte sind durch eine vorzugsweise metallurgische Verbindung, die unter Hitze und Druck entsteht, miteinander verbunden. Zur Verbesserung der Verbindungsfestigkeit der Verbindung wird eine mit den Metallen, aus denen die Schienenabschnitte bestehen, kompatible Metallfolie verwendet.

DE 102019 111000 A1 beschreibt eine Luftfahrzeugsitzbefestigungsbaugruppe, die aufgrund der Verwendung elektroaktiver Polymere das Ausgleichen von Toleranzen und die Befestigung von Luftfahrzeugsitzen in der Passagierkabine des Luftfahrzeuges ermöglicht. Ein Fixieraktor enthält das elektroaktive Polymer und ist zwischen einem fixierten Zustand, in dem keine Bewegung eines Befestigungsbereiches möglich ist, und einem unfixierten Zustand, in dem eine Bewegung des Befestigungsbereichs in Vertikalrichtung möglich ist, elektrisch schaltbar. Damit können die Luftfahrzeugsitze stufenlos entlang der Luftfahrzeugsitzbefestigungsschiene verschoben werden. Ferner kann die Verriegelung der Luftfahrzeugsitze vollautomatisch und gegebenenfalls von zentraler Stelle erfolgen. Denkbar ist auch eine individuelle Ansteuerung der Luftfahrzeugsitze und/oder der Sitzgruppe(n).

### Beschreibung

Es ist eine Aufgabe der Erfindung, eine verbesserte Sitzschiene oder ein verbessertes Schienensystem vorzuschlagen, bei dem eine möglichst einfache Befestigung von Fußbodenpaneelen und gleichzeitig eine flexible Gestaltung sowie vereinfachte Abdichtung ermöglicht wird.

Diese Aufgabe wird gelöst durch die Merkmale des unabhängigen Anspruchs 1. Vorteilhafte Ausführungsformen und Weiterbildungen sind den Unteransprüchen und der nachfolgenden Beschreibung zu entnehmen.

Es wird ein erfindungsgemäßes Schienensystem zur Installation von Gegenständen in einer Kabine eines Fahrzeugs bereitgestellt, aufweisend eine Basisschiene, eine Installationsschiene, und Verbindungsvorrichtungen zum Verbinden der Basisschiene und der Installationsschiene in einer zueinander parallelen Ausrichtung miteinander, wobei die Basisschiene eine Unterseite mit einem Befestigungsabschnitt zum Befestigen der Basisschiene an einem Strukturbauteil des Fahrzeugs, sowie eine Oberseite aufweist, wobei die Installationsschiene eine Installationsfläche aufweist, auf der die Gegenstände aufsetzbar und mit der Installationsschiene verbindbar sind, und wobei das Schienensystem dazu ausgebildet ist, die Installationsfläche in einem vorbestimmten Abstand von der Oberseite zu platzieren, sodass mindestens ein lateraler Zwischenraum zwischen der Installationsschiene und der Oberseite der Basisschiene zum formschlüssigen Halten eines Fußbodenpaneels gebildet ist.

Die Basisschiene dient als strukturelle Basis für das erfindungsgemäße Schienensystem. Sie ist dazu angepasst, mit einem Strukturbauteil des Fahrzeugs verbunden zu werden. Beispielsweise kann die Fahrzeugstruktur mehrere Querträger aufweisen, die sich quer zu einer Längsachse der Fahrzeugstruktur erstrecken. Die Basisschiene kann parallel zu der Längsachse ausgerichtet und an den Querträgern oder anderen Strukturbauteilen angeordnet werden. Die Bauart der Basisschiene kann von der Bauart des entsprechenden Strukturbauteils des Fahrzeugs abhängig gemacht werden. Dabei ist lediglich notwendig, dass die Basisschiene eine Oberseite umfasst, die mit der Installationsschiene verbindbar ist.

Die Basisschiene kann von der Oberseite beabstandete Befestigungsabschnitte aufweisen, die über mechanische Verbindungsmittel mit dem Strukturbauteil des Fahrzeugs verbindbar sind. Beispielsweise könnte die Basisschiene einen Profilquerschnitt umfassen, der sich zumindest weitgehend konstant entlang der Haupterstreckung der Basisschiene erstreckt. Die Oberseite könnte flach ausgeformt und im installierten Zustand der Basisschiene bevorzugt parallel zu dem Kabinenfußboden ausgerichtet sein. Der Profilquerschnitt kann quer, senkrecht oder parallel zu der Oberseite verlaufende Befestigungsabschnitte umfassen, die sich dann von der Oberseite aus in eine von dem Kabinenfußboden abgewandte Richtung erstrecken oder in einem Abstand von der Oberseite unterhalb des Kabinenfußbodens verlaufen. Das Strukturbauteil könnte einen Flansch umfassen, der mit einem vorangehend genannten Querträger verbunden und mit der Basisschiene verbindbar ist.

Die Basisschiene ist bevorzugt zumindest teilweise hohl ausgebildet, sodass sie ein niedriges Gewicht aufweist. Sie könnte durch ein mehrfach abgewinkeltes oder auf andere Art umgeformtes Blech hergestellt sein. Das Blech könnte zudem zur weiteren Reduktion des Gewichts bereichsweise Ausnehmungen umfassen. Die Gestaltung der Basisschiene sollte dabei jedoch stets ausreichend fest sein.

Die Installationsschiene ist dazu vorgesehen, die entsprechenden Gegenstände in der Fahrzeugkabine aufzunehmen, d.h., sie an einer vorgesehenen Position zu fixieren, von ihnen ausgehende Gewichts- und Massenkräfte aufzunehmen und in die Struktur des Fahrzeugs zu leiten. Die Installationsschiene und die Basisschiene ergeben zusammengesetzt eine einzelne Schiene, wobei die Haupterstreckungsrichtungen der Installationsschiene und der Basisschiene einander entsprechen.

Weiterhin entspricht die Längenerstreckung der Installationsschiene bevorzugt der Längenerstreckung der Basisschiene. Es ist auch denkbar, dass die Basisschiene in mehrere Segmente unterteilt ist und die Installationsschiene mehrere dieser Segmente überdeckt. Die Installationsschiene könnte ebenso in mehrere Segmente unterteilt sein, die auf einer einzelnen Basisschiene angeordnet sind. Allerdings könnten auch sowohl die Basisschiene, als auch die Installationsschiene in einzelne Segmente aufgeteilt sein, wobei die Trennstellen der jeweiligen Segmente übereinander oder in der Haupterstreckungsrichtung zueinander versetzt sein könnten.

Die Installationsfläche kann als eine Aufnahmefläche verwendet werden, auf die die Gegenstände bündig auflegbar sind. Die Installationsfläche könnte zur mechanischen Befestigung wie eine übliche Sitzschiene ausgeführt sein und etwa mehrere, in einem Raster angeordnete Öffnungen aufweisen, durch die ein Fitting in einen Hohlraum innerhalb der Installationsschiene erreichbar und dort verklemmbar ist. Andere Varianten sind denkbar und könnten Buchsen, Gewindebohrungen und dergleichen umfassen.

Ein besonderer Aspekt des erfindungsgemäßen Schienensystems liegt in der Ausbildung eines lateralen Zwischenraums zwischen der Basisschiene und der Installationsschiene, in den ein Fußbodenpaneel einbringbar und formschlüssig halterbar ist. Damit erübrigt sich eine aufwändige Herstellung von Durchgangsbohrungen an Randseiten des Fußbodenpaneels sowie an der Installations- oder Basisschiene. Die Befestigung des Fußbodenpaneels ist demnach besonders einfach. Aufgrund der durchgängigen randseitigen Befestigung erfolgt die Kraftleitung zudem nicht punktuell, sondern gleichmäßig flächig. Zudem ist der Kraftverlauf besonders kurz und direkt.

In einer vorteilhaften Ausführungsform weisen die Verbindungsvorrichtungen jeweils eine Buchse auf, die mit der Oberseite der Basisschiene koppelbar und mit der Installationsschiene verbindbar ist. Die Buchse ist bevorzugt aus einem metallischen Material hergestellt und ist zylindrisch ausgeführt. Sie kann weiter bevorzugt einen Kragen aufweisen, der einen Formschluss mit der Installationsschiene erzeugt. Die Buchse kann einen vorbestimmten Abstand zwischen der Installationsschiene und der Basisschiene einstellen. Durch die Auswahl der passenden axialen Länge und einer geeigneten Befestigungsmöglichkeit der Buchse kann eine ausreichend feste Verbindung zwischen beiden Schienen geschaffen werden. Es ist bevorzugt, mehrere Buchsen einzusetzen, die in einem vorbestimmten Abstand zueinander entlang der Längserstreckung der Schienen angeordnet sind. Die Buchse weist einen Hohlraum auf, in den sich Befestigungsmittel hinein erstrecken können. Der Hohlraum könnte ein Innengewinde aufweisen, das mit einem Außengewinde eines Befestigungsmittels korrespondiert.

In einer vorteilhaften Ausführungsform ist die Buchse mit der Basisschiene verschraubt oder vernietet. Die Buchse könnte etwa an einem der Basisschiene zugewandten Ende ein Außengewinde umfassen, das mit einem Innengewinde in der Basisschiene korrespondiert. Die Buchse könnte dadurch einfach in die Basisschiene eingeschraubt werden, sodass ihr Hohlraum frei verfügbar ist, um ein Befestigungsmittel aufzunehmen. Das Vernieten der Buchse mit der Basisschiene könnte durch entsprechendes Verquetschen des der Basisschiene zugewandten Endes mit einer geeigneten Vorrichtung erfolgen.

**In** einer vorteilhaften Ausführungsform weist die Installationsschiene eine Auflagefläche auf, die auf die Oberseite der Basisschiene auflegbar ist, sodass die Installationsfläche in dem vorbestimmten Abstand platziert ist. Die Installationsschiene umfasst folglich eine von der Installationsfläche abgewandte Fläche, die auf die Oberseite der Basisschiene aufgelegt werden kann. Die Auflagefläche kann parallel zu der Installationsfläche verlaufen. Durch das Auflegen der Installationsschiene wird eine durch die Abmessungen der Installationsschiene bestimmte Position der Installationsfläche erreicht. Druckkräfte können von der Installationsschiene durch direkten Kontakt der Auflagefläche mit der Basisschiene in diese übertragen werden. Die Fixierung der Installationsschiene kann durch Formschluss und/oder Kraftschluss erfolgen.

**In** einer vorteilhaften Ausführungsform weist die Installationsschiene durch die Auflagefläche ragende Durchgangsbohrungen zum Durchführen von Verbindungsvorrichtungen zum Befestigen der Installationsschiene mit der Basisschiene auf. Die Befestigungselemente können Bolzen und/oder Nieten umfassen. Die Durchgangsbohrungen könnten einen Absatz aufweisen, der einen Bohrungsgrund zum Auflegen eines Kragens des Befestigungselements oder dergleichen bildet. Die Durchgangsbohrungen könnten zudem dazu ausgebildet sein, eine Verbindung mit Fittingen zum Befestigen der Gegenstände einzugehen.

**In** einer vorteilhaften Ausführungsform weist die Installationsschiene mindestens eine laterale Auskragung zum Ausbilden des mindestens einen lateralen Zwischenraums auf. Die Auskragung könnte an einer der Installationsfläche zugewandten Seite der Installationsschiene ausgebildet sein. Die Auskragung umschließt dann zusammen mit der Basisschiene das Fußbodenpaneel.

In einer vorteilhaften Ausführungsform weist das mindestens eine Fußbodenpaneel mindestens eine Anordnung erster Formschlussmittel auf, die komplementär zu zweiten Formschlussmitteln ausgebildet und hierzu ausgerichtet sind, welche an einer zu dem betreffenden Fußbodenpaneel gewandten Seite der Installationsschiene und/oder der Basisschiene angeordnet sind. Das erste Formschlussmittel kann eine Auswölbung, einen Vorsprung, eine Einwölbung, eine Vertiefung, eine Ausnehmung oder ein ähnliches Formmerkmal sein. Das zweite Formschlussmittel ist entsprechend komplementär hierzu ausgebildet und umfasst demnach eine Einwölbung, eine Vertiefung, eine Auswölbung, einen Vorsprung oder ähnliches. Beide Formschlussmittel greifen ineinander ein und sichern das Fußbodenpaneel relativ zu der Installationsschiene und/oder der Basisschiene, sodass eine Kraftübertragung in mehreren Richtungen erfolgen kann.

In einer vorteilhaften Ausführungsform weisen das erste Formschlussmittel und das zweite Formschlussmittel eine Verzahnung auf. Die Verzahnung könnte parallel oder quer zu einer Haupterstreckungsrichtung der Installationsschiene bzw. der Basisschiene realisiert sein. Die Positionierung der beiden Formschlussmittel ist demnach relativ frei und das Fußbodenpaneel kann in einem mehr oder weniger feinen Raster an der Installationsschiene bzw. Basisschiene platziert werden und eine Kraft quer zu der Verzahnungsrichtung übertragen.

In einer vorteilhaften Ausführungsform weisen das erste Formschlussmittel und das zweite Formschlussmittel Auswölbungen und/oder Einwölbungen auf. Das Fußbodenpaneel oder die entsprechende Schiene könnte folglich eine bevorzugt abgerundete, kuppelartige oder kegelabschnittsförmige Ausbuchtung umfassen, die in komplementär geformte, bevorzugt abgerundete oder kegelabschnittsförmige Einbuchtungen eingreift. Durch eine Abrundung oder Kegelabschnittsform könnte eine automatische Positionierung der beiden Formschlussmittel zueinander erfolgen.

In einer vorteilhaften Ausführungsform weist die Basisschiene einen Omega-förmigen Profilquerschnitt auf. Die Basisschiene kann aus einem umgeformten Blech oder als ein gefügtes Bauteil realisiert sein, bei dem sich zwei Schenkel des Profilquerschnitts von der Oberseite aus erstrecken und einen Zwischenraum zwischen sich einschließen. Hierdurch wird ein hohes Flächenträgheitsmoment realisiert, durch das die Basisschiene eine hohe Stabilität aufweist, jedoch ein geringes Gewicht. Die Schenkel können zur Befestigung an dem Strukturbauteil genutzt werden.

In einer vorteilhaften Ausführungsform ist die Basisschiene aus einem metallischen Werkstoff oder einem Kunststoff hergestellt. Es kann sich anbieten, die Basisschiene aus einer Aluminiumlegierung, Titan, einem kohlefaserverstärkten Kunststoff oder ähnlichem herzustellen, um ein geringes Gewicht bei einer hohen Stabilität zu gewährleisten.

In einer vorteilhaften Ausführungsform ist eine Grenzfläche zwischen der Installationsschiene und dem mindestens einen Fußbodenpaneel flüssigkeitsdicht abgedichtet. Eine separate Abdichtung unterhalb des Fußbodenpaneels ist nicht erforderlich.

In einer vorteilhaften Ausführungsform weist die Installationsschiene mehrere Öffnungen zum Verbinden der Gegenstände auf. Die Installationsöffnungen können in Buchsen ausgebildet sein, die vorangehend beschrieben wurden. Sollte die Installationsschiene Durchgangsöffnungen umfassen, könnten auch dort Buchsen angeordnet sein, die zur Aufnahme von entsprechenden Verbindungsmitteln dienen.

Die Erfindung betrifft ferner eine Kabine für ein Fahrzeug, aufweisend mindestens einen Gegenstand, insbesondere einen Sitz oder ein Kabinenmonument, und mindestens ein Schienensystem nach der vorhergehenden Beschreibung zum Befestigen des mindestens einen Gegenstandes in der Kabine.

Die Erfindung betrifft außerdem ein Fahrzeug, insbesondere ein Flugzeug, aufweisend mindestens eine Kabine wie vorangehend beschrieben und/oder mindestens ein Schienensystem nach der vorhergehenden Beschreibung.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Schnittansicht eines Schienensystems.
- Fig. 2: eine schematische Schnittansicht des Schienensystems mit modifizierter Verbindungsvorrichtung.
- Fig. 3: eine schematische, räumliche Ansicht des Schienensystems.
- Fig. 4: eine schematische, räumliche Ansicht eines Schienensystems, zum besseren technischen Verständnis der beanspruchten Erfindung.
- Fig. 5: eine schematische Schnittansicht des Schienensystems aus Fig. 4.
- Fig. 6: eine schematische Draufsicht, Schnittansicht und Detailansicht des Schienensystems aus Fig. 4 und 5.
- Fig. 7: eine schematische Draufsicht, Schnittansicht und Detailansicht des Schienensystems aus Fig. 4 und 5 mit modifizierter Installationsschiene.
- Fig. 8: ein Flugzeug.

### Detaillierte Beschreibung von Ausführungsbeispielen

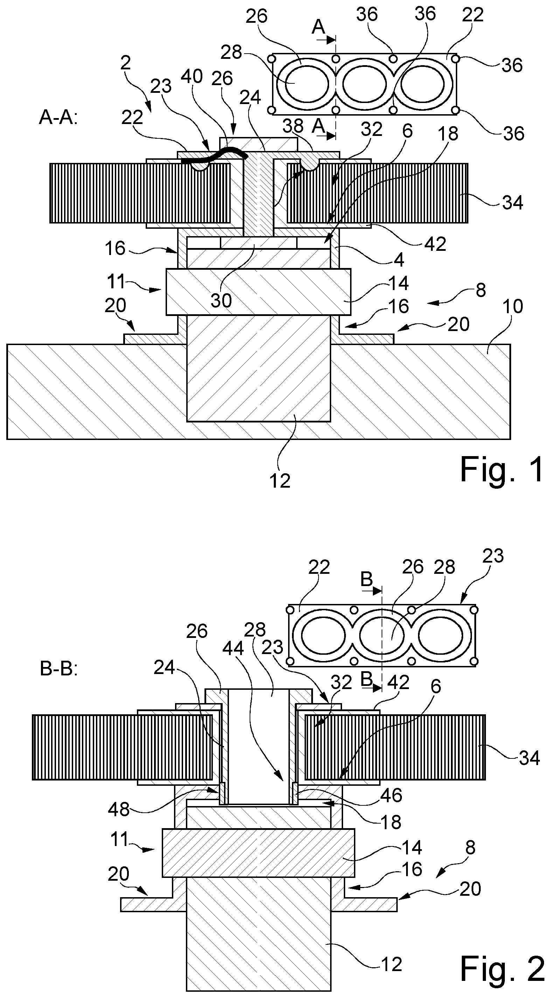

Fig. 1 zeigt ein Schienensystem 2 zur Installation von Gegenständen in einer Kabine eines Fahrzeugs. Die Ansicht in Fig. 1 ist eine Schnittansicht quer zu einer Längserstreckung des Schienensystems 2 bzw. der Kabine des Fahrzeugs.

In dem Ausführungsbeispiel ist eine Basisschiene 4 gezeigt, die eine Oberseite 6 und eine Unterseite 8 aufweist. Die Unterseite 8 liegt beispielhaft auf einem Fußbodenträger 10 auf, der ein zum Tragen eines Fußbodens vorgesehenes Strukturbauteil des Fahrzeugs ist, und umfasst einen Befestigungsabschnitt 11. **In** diesem ist die Basisschiene 4 über einen Flansch bzw. eine Lasche 12 sowie einen Verbindungsbolzen 14 mit dem Fußbodenträger 10 verbunden. Es ist verständlich, dass die Basisschiene 4 mit mehreren Fußbodenträgern 10 verbunden ist, die parallel und in einem Abstand zueinander angeordnet sind und beispielsweise entlang einer Längserstreckung des Fahrzeugs verteilt sind. Die Basisschiene 4 weist ein Omega-förmiges Profil auf, das zwei voneinander beabstandete Schenkel 16 umfasst, die einen Zwischenraum 18 einschließen. An einer von der Oberseite 6 abgewandten Seite der Schenkel 16 ist jeweils ein Kragen 20 angeordnet, der parallel zu der Oberseite 6 verläuft.

Eine Installationsschiene 22 ist in einem Abstand zu der Oberseite 6 angeordnet und wird dort durch Verbindungsvorrichtungen 24 getragen. Die Installationsschiene 22 weist beispielhaft eine flache, streifenartige Struktur auf, deren Breite ungefähr der Breite der Oberseite 6 der Basisschiene 4 entspricht. Eine in die Kabine ragende, zur Befestigung genutzte Installationsfläche 23 der Installationsschiene 22 und die Oberseite 6 der Basisschiene 4 sind dabei exemplarisch parallel zueinander ausgerichtet. Die Verbindungsvorrichtungen 24 sind als zylindrische Buchsen mit einem Mantel, der einen umlaufenden Kragen 26 und einen Hohlraum 28 aufweist, ausgeführt. In Fig. 1 ist die zylindrische Buchse 24 exemplarisch mittels einer Mutter 30 mit der Oberseite 6 der Basisschiene 4 verschraubt, sodass der Kragen 26 in einem festen Abstand von der Oberseite 6 positioniert ist. Die Installationsschiene 22 befindet sich in einem Flächenkontakt mit dem Kragen 26. Zwischen der Oberseite 6 und der Installationsschiene 22 wird hierdurch ein lateraler Zwischenraum 32 ausgebildet, der zum formschlüssigen Haltern eines Fußbodenpaneels 34 verwendet wird.

Die Verbindungsvorrichtungen 24 könnten stoffschlüssig mit der Installationsschiene 22 verbunden sein, sodass die Installationsschiene 22 Lasten direkt über die Verbindungsvorrichtungen 24 in die Basisschiene 4 und damit in die Struktur des Fahrzeugs einleitet. Die Stärke der Installationsschiene 22 ist hier beispielhaft geringer als die Stärke der Fußbodenpaneele 34.

An einer Oberseite der Fußbodenpaneele 34 sind erste Formschlussmittel 36 in Form von Auswölbungen angeordnet, die komplementär zu zweiten Formschlussmitteln 38 an der Unterseite der Installationsschiene 22 ausgeführt sind. Hierdurch kann die Befestigung des Fußbodenpaneels 34 verbessert werden. Es ist verständlich, dass die Formschlussmittel 36 und 38 punktförmig in einem Raster entlang der Installationsschiene 22 angeordnet sind oder sich kontinuierlich entlang der Installationsschiene 22 erstrecken. Sind sie punktförmig, kann ein Formschluss auch in Richtung der Längserstreckung der Installationsschiene 22 erreicht werden.

Durch das Anordnen des Fußbodenpaneels 34 in den lateralen Zwischenraum 32 sowie durch die Verwendung der Formschlussmittel 36 und 38 wird ein besonders kurzer und direkter Kraftverlauf 40 zwischen dem Fußbodenpaneel 34 und der Struktur in Form des Schienensystems 2 und den Fußbodenträger 10 verursacht.

In dem lateralen Zwischenraum 32 ist gemäß einer Ausführungsform eine Dichtungsanordnung 42 vorgesehen, die das Fußbodenpaneel 34 gegenüber dem Schienensystem 2 abdichtet. Flüssigkeiten und Schmutz, die auf das Fußbodenpaneel 34 geraten, können hierdurch nicht in den lateralen Zwischenraum 32 geraten. Die Dichtungsanordnung 42 könnte eine längliche Dichtung mit einem geeigneten Profil aufweisen, das mit einer Längskante des Fußbodenpaneels 34 korrespondiert und in dem das Fußbodenpaneel 34 angeordnet ist.

Fig. 2 zeigt eine leichte Modifikation des Schienensystems 2. Hier ist die Verbindungsvorrichtung 24 ebenso als eine Buchse ausgeführt, welche an einem unteren Ende 44 ein Außengewinde 46 aufweist, das in ein korrespondierend geformtes Innengewinde 48 in der Basisschiene 4 eingeschraubt ist. Ein separates Befestigungselement ist hierdurch nicht erforderlich und das Gewicht des Schienensystems 2 kann positiv beeinflusst werden. Das Außengewinde 46 kann so angepasst sein, dass die Verbindungsvorrichtung 24 eine vorbestimmte Einschraubtiefe erreicht, mit der der Kragen 26 präzise positioniert ist.

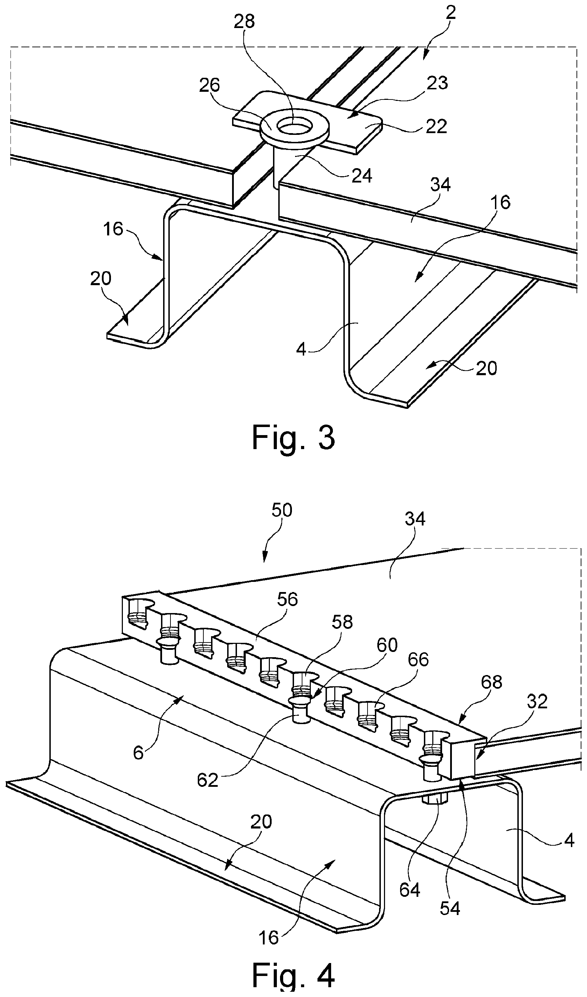

Fig. 3 zeigt das Ausführungsbeispiel aus Fig. 2 in einer räumlichen Darstellung, in der die Omega-förmige Struktur der Basisschiene 4 gut zu erkennen ist. Die Installationsschiene 22 ist hier der Übersichtlichkeit halber lediglich angedeutet, wobei jedoch die streifenartige Struktur erkennbar ist. Ferner ist der Befestigungsabschnitt 11 der Basisschiene 4 nicht dargestellt, entspricht jedoch dem der vorherigen Figuren. Die Basisschiene 4 kann besonders bevorzugt aus einem Blech oder einem anderen, umgeformten, ursprünglich flächigen Ausgangsmaterial hergestellt sein, beispielsweise aus einem faserverstärkten Kunststoff. Durch abgerundete Kanten zwischen einzelnen Flächenabschnitten der Basisschiene 4 ergibt sich ein harmonischer, gleichmäßiger Kraftverlauf. Zum Befestigen von Gegenständen wird der Hohlraum 28 der Buchsen 24 verwendet, hierzu könnte etwa ein Innengewinde in dem Hohlraum 28 angeordnet sein (nicht gezeigt).

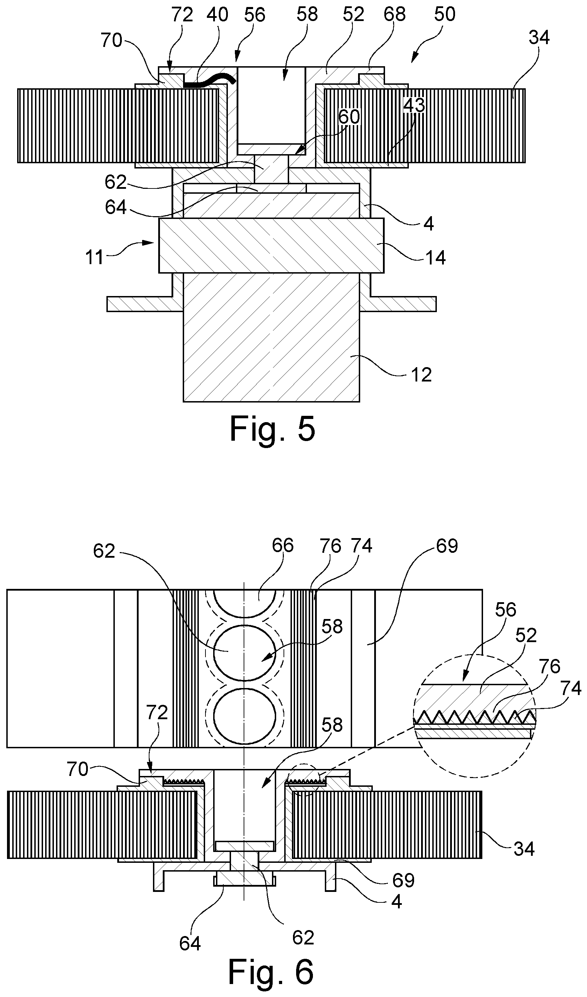

Eine zum besseren technischen Verständnis der beanspruchten Erfindung dargestellte Ausführungsform ist in Fig. 4 bis 6 mit einem Schienensystem 50 gezeigt, das ebenfalls die Basisschiene 4, jedoch eine modifizierte Installationsschiene 52 umfasst. Fig. 4 zeigt das Schienensystem 50 aus einer räumlichen Perspektive, in Fig. 5 als Schnittansicht und in Fig. 6 als Schnittansicht, Draufsicht und Detailansicht. In Fig. 4 und 6 ist der Befestigungsabschnitt 11 der Basisschiene 4 nicht dargestellt, entspricht jedoch dem aus den Fig. 1 und 2.

Die Installationsschiene 52 weist in diesem Beispiel eine deutlich größere Stärke auf als in den vorherigen Figuren. Die Stärke überschreitet dabei die Stärke des Fußbodenpaneels 34. Die Installationsschiene 52 weist dabei eine Auflagefläche 54 auf, die direkt auf die Oberseite 6 der Basisschiene 4 auflegbar ist. Eine Installationsfläche 56 ragt in einem vorbestimmten Abstand zu der Oberseite 6 der Basisschiene über die daran angeordneten Fußbodenpaneele 34. Zur Befestigung der Installationsschiene 52 weist diese eine Reihe von Durchgangsbohrungen 58 auf, die sich vollständig durch die Installationsschiene 52 erstrecken und jeweils einen Absatz 60 aufweisen. Verbindungsvorrichtungen 62 in Form von Bolzen erstrecken sich durch die Durchgangsbohrungen 58 und liegen auf dem jeweiligen Absatz 60 auf. Zum Sichern der Bolzen 62 sind Muttern 64 vorgesehen, die auf einer von dem jeweiligen Bolzen 62 abgewandten Seite der Basisschiene 4 angeordnet sind. Zwischen aufeinanderfolgenden Durchgangsbohrungen 58 sind Aufnahmebohrungen 66 vorgesehen, die zur Aufnahme von Verbindungsmitteln für auf die Installationsfläche 56 auflegbare Gegenstände vorgesehen sind. Die Aufnahmebohrungen 66 könnten Innengewinde, Rastflächen oder andere Formmerkmale aufweisen, die zum Eingehen einer form- und/oder kraftschlüssigen Verbindung geeignet sind.

Eine laterale Auskragung 68 an der Installationsschiene 52 führt zur Schaffung des lateralen Zwischenraums 32, in dem das Fußbodenpaneel 34 formschlüssig halterbar ist. Die Installationsschiene 52 kann auf beiden lateralen Seiten eine derartige Auskragung 68 aufweisen. Bevorzugt ist die Installationsschiene 52 achsensymmetrisch ausgebildet. Die Durchgangsbohrungen 58 und die Aufnahmebohrungen 66 können in einem bestimmten Raster angeordnet sein, sodass die Bohrungen 58 und 66 gleiche Abstände zueinander aufweisen. Das Raster könnte beispielsweise ein Zollraster sein, sodass die Bohrungen 58 und 66 einen Abstand von 1 oder 2 Zoll (2,54-5,08 cm) zueinander aufweisen. Es ist weiterhin denkbar, dass auch die Durchgangsbohrungen 58 in einem oberen, zu der Installationsfläche 56 weisenden Abschnitt analog zu den Aufnahmebohrungen 66 mit einem Innengewinde oder dergleichen ausgestattet sind, um eine Befestigung von Gegenständen daran zu ermöglichen.

Das Schienensystem 50 kann ebenso eine Dichtungsanordnung 69 aufweisen, das ähnlich wie die Dichtungsanordnung 42 ausgebildet sein kann. Die Dichtungsanordnung 69 könnte Vorsprünge 70 und Vertiefungen 72 aufweisen, die formschlüssig miteinander verbindbar sind und die Abdichtung zwischen dem Fußbodenpaneel 34 und der Basisschiene 4 bzw. der tragenden Struktur verbessern. Die Vorsprünge 70 und Vertiefungen 72 können bevorzugt kontinuierlich entlang der Längserstreckung der Installationsschiene 52 angeordnet werden.

Fig. 6 zeigt zum besseren technischen Verständnis neben einer Schnittdarstellung eine Draufsicht auf die Installationsfläche 56 sowie eine Detailansicht. In letzterer ist erkennbar, dass das Fußbodenpaneel 34 erste Formschlussmittel 74 in Form einer zu der Installationsfläche 56 weisenden ersten Verzahnung und die Installationsschiene 52 zweite Formschlussmittel 76 in Form einer zu dem Fußbodenpaneel 34 weisenden zweiten Verzahnung aufweist. Die Verzahnungen sind hierbei parallel zu der Längserstreckung der Installationsschiene 52 ausgeformt.

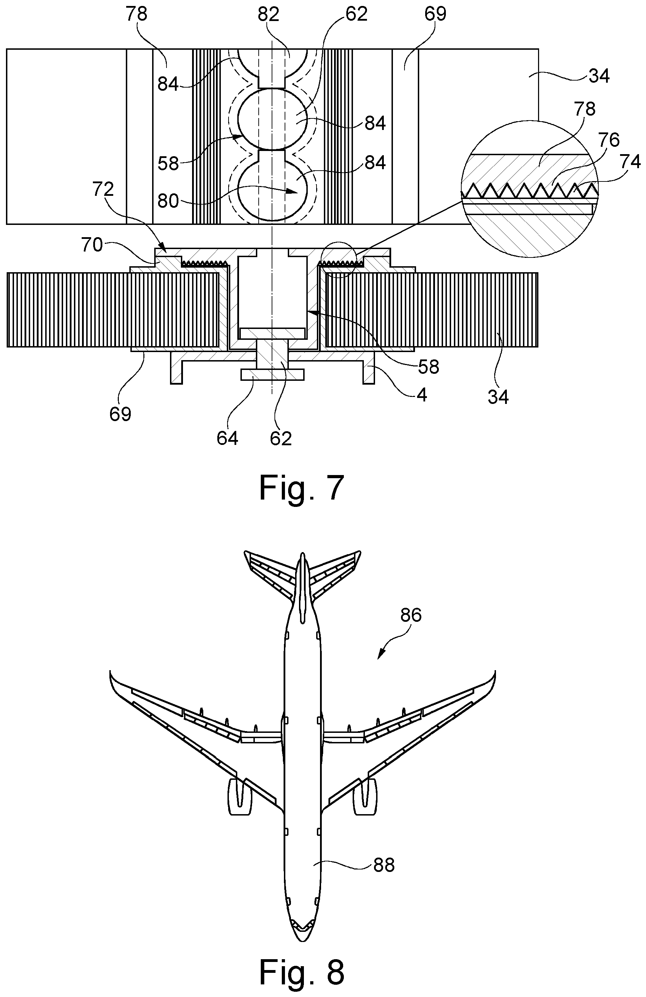

Fig. 7 zeigt zum besseren technischen Verständnis eine weitere Schnittdarstellung des Schienensystems 50, wobei hier jedoch eine abgewandelte Ausführung einer Installationsschiene 78 dargestellt ist, die statt voneinander separat angeordneter Durchgangsbohrungen 58 und Aufnahmebohrungen 66 eine Profilstruktur aufweist, die der einer gängigen Sitzschiene entspricht, beispielsweise basierend auf einer Douglas-Schiene. Hier ist ein Hohlraum 80 vorgesehen, der durch einen von Öffnungen 84 durchsetzten länglichen Schlitz 82 nach außen offen ist. Die Öffnungen 84 können dabei zumindest teilweise zu einer Durchgangsbohrung 58 führen, sodass Verbindungsvorrichtungen 62 zur Befestigung der Installationsschiene 78 durchgesteckt oder eingeschraubt und mit der Basisschiene 4 verbunden werden können. Hier sind erste Formschlussmittel 74 und zweite Formschlussmittel 76 vorgesehen, durch die eine verbesserte Verbindung der Fußbodenpaneele 34 mit der Installationsschiene 78 ermöglicht wird. Auch in dieser Darstellung ist der Befestigungsabschnitt 11 der Basisschiene 4 der Übersichtlichkeit halber nicht dargestellt.

Schließlich zeigt Fig. 8 ein Flugzeug 86 mit einer darin ausgebildeten Kabine 88, in der ein Kabinenfußboden angeordnet ist. Dieser kann ein Schienensystem 2 oder 50 nach der vorangehenden Erläuterung aufweisen, sodass beispielsweise Passagiersitze und/oder Kabinenmonumente hiervon getragen werden können. Der Kabinenfußboden weist dabei Fußbodenpaneele 34 auf, die von dem Schienensystem 2 oder 50 getragen werden.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Schienensystem
- 4: Basisschiene
- 6: Oberseite
- 8: Unterseite
- 10: Fußbodenträger
- 11: Befestigungsabschnitt
- 12: Lasche/Flansch
- 14: Verbindungsbolzen
- 16: Schenkel
- 18: Zwischenraum
- 20: Kragen
- 22: Installationsschiene
- 23: Installationsfläche
- 24: Verbindungsvorrichtung
- 26: Kragen
- 28: Hohlraum
- 30: Mutter
- 32: lateraler Zwischenraum
- 34: Fußbodenpaneel
- 36: erstes Formschlussmittel
- 38: zweites Formschlussmittel
- 40: Kraftverlauf
- 42: Dichtungsanordnung
- 44: unteres Ende
- 46: Außengewinde
- 48: Innengewinde
- 50: Schienensystem
- 52: Installationsschiene
- 54: Auflagefläche
- 56: Installationsfläche
- 58: Durchgangsbohrung
- 60: Absatz
- 62: Verbindungsvorrichtung
- 64: Mutter
- 66: Aufnahmebohrung
- 68: laterale Auskragung
- 69: Dichtungsanordnung
- 70: Vorsprung
- 72: Vertiefung
- 74: erstes Formschlussmittel
- 76: zweites Formschlussmittel
- 78: Installationsschiene
- 80: Hohlraum
- 82: Schlitz
- 84: Öffnung
- 86: Flugzeug
- 88: Kabine

## Patentansprüche

1. Schienensystem (2) zur Installation von Gegenständen in einer Kabine (88) eines Fahrzeugs (86), aufweisend:
eine Basisschiene (4),
eine Installationsschiene (22), und
Verbindungsvorrichtungen (24) zum Verbinden der Basisschiene (4) und der Installationsschiene (22) in einer zueinander parallelen Ausrichtung miteinander,
wobei die Basisschiene (4) eine Unterseite (8) mit einem Befestigungsabschnitt (11) zum Befestigen der Basisschiene (4) an einem Strukturbauteil (10) des Fahrzeugs (86), sowie eine Oberseite (6) aufweist,
wobei die Installationsschiene (22) eine Installationsfläche (23) aufweist, auf der die Gegenstände aufsetzbar und mit der Installationsschiene (22) verbindbar sind,
wobei das Schienensystem (2) dazu ausgebildet ist, die Installationsfläche (23) in einem vorbestimmten Abstand von der Oberseite (6) zu platzieren, sodass mindestens ein lateraler Zwischenraum (32) zwischen der Installationsschiene (22) und der Oberseite (6) der Basisschiene (4) zum formschlüssigen Halten eines Fußbodenpaneels (34) gebildet ist; und
wobei die Verbindungsvorrichtungen (24) jeweils eine Buchse aufweisen, die mit der Oberseite (6) der Basisschiene (4) gekoppelt und mit der Installationsschiene (22) verbunden ist;
wobei die Buchsen einen Mantel aufweisen, der einen umlaufenden Kragen (26) und einen Hohlraum (28) aufweist; und
wobei zum Befestigen von Gegenständen der Hohlraum (28) der Buchsen (24) verwendbar ist.

2. Schienensystem (2) nach Anspruch 1,
wobei die Buchse mit der Basisschiene (4) verschraubt oder vernietet ist.

3. Schienensystem (2) nach Anspruch 1,
wobei die Installationsschiene (22) eine Auflagefläche aufweist, die auf die Oberseite (6) der Basisschiene (4) auflegbar ist, sodass die Installationsfläche (23) in dem vorbestimmten Abstand platziert ist.

4. Schienensystem (2) nach Anspruch 3,
wobei die Installationsschiene (22) durch die Auflagefläche ragende Durchgangsbohrungen zum Durchführen von Verbindungsvorrichtungen (24) zum Befestigen der Installationsschiene (22) mit der Basisschiene (4) aufweist.

5. Schienensystem (2) nach Anspruch 3 oder 4,
wobei die Installationsschiene (22) mindestens eine laterale Auskragung zum Ausbilden des mindestens einen lateralen Zwischenraums (32) aufweist.

6. Schienensystem (2) nach einem der vorhergehenden Ansprüche, ferner umfassend mindestens ein Fußbodenpaneel (34);
wobei das mindestens eine Fußbodenpaneel (34) mindestens eine Anordnung erster Formschlussmittel (36) aufweist, die komplementär zu zweiten Formschlussmitteln (38) ausgebildet und hierzu ausgerichtet sind, welche an einer zu dem betreffenden Fußbodenpaneel (34) gewandten Seite der Installationsschiene (22) und/oder der Basisschiene (4) angeordnet sind.

7. Schienensystem (2) nach Anspruch 6,
wobei das erste Formschlussmittel (36) und das zweite Formschlussmittel (38) eine Verzahnung aufweisen.

8. Schienensystem (2) nach Anspruch 6 oder 7,
wobei das erste Formschlussmittel (36) und das zweite Formschlussmittel (38) Auswölbungen und/oder Einwölbungen aufweisen.

9. Schienensystem (2) nach einem der vorhergehenden Ansprüche,
wobei die Basisschiene (4) einen Omega-förmigen Profilquerschnitt aufweist.

10. Schienensystem (2) nach einem der vorhergehenden Ansprüche,
wobei die Basisschiene (4) aus einem metallischen Werkstoff oder einem Kunststoff hergestellt ist.

11. Schienensystem (2) nach einem der vorhergehenden Ansprüche,
wobei in dem lateralen Zwischenraum (32) eine Dichtungsanordnung (42) vorgesehen ist, die das Fußbodenpaneel (34) gegenüber dem Schienensystem (2) abdichtet.

12. Schienensystem (2) nach einem der vorhergehenden Ansprüche,
wobei die Installationsschiene (22) mehrere Öffnungen zum Verbinden der Gegenstände aufweist.

13. Kabine (88) für ein Fahrzeug (86), aufweisend mindestens einen Gegenstand, insbesondere einen Sitz oder ein Kabinenmonument, und mindestens ein Schienensystem (2) nach einem der vorhergehenden Ansprüche zum Befestigen des mindestens einen Gegenstandes in der Kabine (88).

14. Fahrzeug (86), insbesondere ein Flugzeug (86), aufweisend mindestens eine Kabine (88) nach Anspruch 14 und/oder mindestens ein Schienensystem (2) nach einem der Ansprüche 1 bis 12.

## Claims

1. A rail system (2) for installing objects in a cabin (88) of a vehicle (86), comprising:
a base rail (4),
an installation rail (22), and
connecting devices (24) for connecting the base rail (4) and the installation rail (22) to one another in a mutually parallel alignment,
wherein the base rail (4) comprises a bottom surface (8) with a fastening portion (11) for fastening the base rail (4) to a structural component (10) of the vehicle (86), as well as a top surface (6),
wherein the installation rail (22) comprises a installation surface (23) onto which the objects can be placed and connected to the installation rail (22),
wherein the rail system (2) is configured to position the installation surface (23) at a predetermined distance from the top surface (6) such that at least one lateral gap (32) is formed between the installation rail (22) and the top surface (6) of the base rail (4) is formed for the positive retention of a floor panel (34); and
wherein the connecting devices (24) each comprise a bushing coupled to the top surface (6) of the base rail (4) and connected to the installation rail (22);
wherein the bushings comprise a housing having a circumferential flange (26) and a cavity (28); and
wherein the cavity (28) of the bushings (24) is usable for securing objects.

2. Rail system (2) according to claim 1,
wherein the bushing is screwed or riveted to the base rail (4).

3. Rail system (2) according to claim 1,
wherein the installation rail (22) has a contact surface that can be placed on the top surface (6) of the base rail (4) so that the installation surface (23) is positioned at the predetermined distance.

4. Rail system (2) according to claim 3,
wherein the installation rail (22) comprises through holes extending through the contact surface for passing connecting devices (24) for securing the installation rail (22) to the base rail (4).

5. Rail system (2) according to claim 3 or 4,
wherein the installation rail (22) comprises at least one lateral projection for forming the at least one lateral gap (32).

6. Rail system (2) according to one of the preceding claims, further comprising at least one floor panel (34);
wherein the at least one floor panel (34) comprises at least one arrangement of first interlocking means (36) configured complementarily to and aligned with second interlocking means (38), which are arranged on a side of the installation rail (22) and/or the base rail (4) facing the respective floor panel (34).

7. Rail system (2) according to claim 6,
wherein the first form-fitting means (36) and the second form-fitting means (38) comprise interlocking teeth.

8. Rail system (2) according to claim 6 or 7,
wherein the first form-fitting means (36) and the second form-fitting means (38) have protrusions and/or recesses.

9. Rail system (2) according to one of the preceding claims,
wherein the base rail (4) has an omega-shaped cross-sectional profile.

10. Rail system (2) according to one of the preceding claims,
wherein the base rail (4) is made of a metallic material or a plastic.

11. Rail system (2) according to one of the preceding claims,
wherein a sealing arrangement (42) is provided in the lateral gap (32) to seal the floor panel (34) against the rail system (2).

12. Rail system (2) according to one of the preceding claims,
wherein the installation rail (22) has a plurality of openings for connecting the objects.

13. A cabin (88) for a vehicle (86), comprising at least one object, in particular a seat or a cabin fixture, and at least one rail system (2) according to any one of the preceding claims for securing the at least one object in the cabin (88).

14. Vehicle (86), in particular an aircraft (86), comprising at least one cabin (88) according to claim 14 and/or at least one rail system (2) according to any one of claims 1 to 12.

## Revendications

1. Système de rails (2) pour l'installation d'objets dans une cabine (88) d'un véhicule (86), comprenant :
un rail de base (4),
un rail d'installation (22), et
des dispositifs de liaison (24) pour relier le rail de base (4) et le rail d'installation (22) l'un à l'autre dans un alignement mutuel parallèle,
dans lequel le rail de base (4) présente une face inférieure (8) munie d'une section de fixation (11) pour fixer le rail de base (4) à un composant structurel (10) du véhicule (86), ainsi qu'une face supérieure (6),
dans lequel le rail d'installation (22) présente une surface d'installation (23) sur laquelle les objets peuvent être placés et reliés au rail d'installation (22),
dans lequel le système de rails (2) est conçu pour placer la surface d'installation (23) à une distance prédéterminée de la face supérieure (6), de sorte qu'au moins un espace intermédiaire latéral (32) entre le rail d'installation (22) et la face supérieure (6) du rail de base (4) est formé pour maintenir par complémentarité de forme un panneau de plancher (34) ; et
dans lequel les dispositifs de liaison (24) présentent chacun une douille couplée à la face supérieure (6) du rail de base (4) et reliée au rail d'installation (22) ;
dans lequel les douilles présentent une enveloppe munie d'un collier périphérique (26) et d'une cavité (28) ; et
dans lequel la cavité (28) des douilles (24) peut être utilisée pour fixer des objets.

2. Système de rails (2) selon la revendication 1,
dans lequel la douille est vissée ou rivetée au rail de base (4).

3. Système de rails (2) selon la revendication 1,
dans lequel le rail d'installation (22) présente une surface d'appui qui peut être posée sur la face supérieure (6) du rail de base (4), de sorte que la surface d'installation (23) est placée à la distance prédéterminée.

4. Système de rails (2) selon la revendication 3,
dans lequel le rail d'installation (22) présente des trous de passage s'étendant à travers la surface d'appui pour le passage de dispositifs de liaison (24) destinés à fixer le rail d'installation (22) au rail de base (4).

5. Système de rails (2) selon la revendication 3 ou 4,
dans lequel le rail d'installation (22) présente au moins un encorbellement latéral pour former l'au moins un espace intermédiaire latéral (32).

6. Système de rails (2) selon l'une des revendications précédentes, comprenant en outre au moins un panneau de plancher (34) ;
dans lequel l'au moins un panneau de plancher (34) présente au moins un agencement de premiers moyens de verrouillage par complémentarité de forme (36) configurés de manière complémentaire à des seconds moyens de verrouillage par complémentarité de forme (38) et alignés avec ceux-ci, lesquels sont disposés sur un côté du rail d'installation (22) et/ou du rail de base (4) tourné vers le panneau de plancher (34) respectif.

7. Système de rails (2) selon la revendication 6,
dans lequel le premier moyen de verrouillage par complémentarité de forme (36) et le second moyen de verrouillage par complémentarité de forme (38) présentent une denture.

8. Système de rails (2) selon la revendication 6 ou 7,
dans lequel le premier moyen de verrouillage par complémentarité de forme (36) et le second moyen de verrouillage par complémentarité de forme (38) présentent des parties convexes et/ou des parties concaves.

9. Système de rails (2) selon l'une des revendications précédentes,
dans lequel le rail de base (4) présente une section transversale de profil en forme d'oméga.

10. Système de rails (2) selon l'une des revendications précédentes,
dans lequel le rail de base (4) est fabriqué à partir d'un matériau métallique ou d'une matière plastique.

11. Système de rails (2) selon l'une des revendications précédentes,
dans lequel un agencement d'étanchéité (42) est prévu dans l'espace intermédiaire latéral (32), lequel assure l'étanchéité du panneau de plancher (34) par rapport au système de rails (2).

12. Système de rails (2) selon l'une des revendications précédentes,
dans lequel le rail d'installation (22) présente plusieurs ouvertures pour la liaison des objets.

13. Cabine (88) pour un véhicule (86), présentant au moins un objet, en particulier un siège ou un monument de cabine, et au moins un système de rails (2) selon l'une des revendications précédentes pour fixer l'au moins un objet dans la cabine (88).

14. Véhicule (86), en particulier un aéronef (86), présentant au moins une cabine (88) selon la revendication 13 et/ou au moins un système de rails (2) selon l'une des revendications 1 à 12.
